# EUROPEAN PATENT SPECIFICATION

(11) **EP 3 812 110 B1**
(45) Date of publication and mention of the grant of the patent: **02.09.2026**
(21) Application number: 19826176.0
(22) Date of filing: 20.06.2019
(51) Int. Cl.: B25J 13/00, B25J 9/06, B25J 9/00, B25J 9/16, G05B 19/418

(54) **ROBOT CONTROL SYSTEM**
ROBOTERSTEUERUNGSSYSTEM
SYSTÈME DE COMMANDE DE ROBOT

(30) Priority: 25.06.2018 JP 2018120060
(43) Date of publication of application: 28.04.2021
(73) Proprietor: Kawasaki Jukogyo Kabushiki Kaisha, Kobe-shi, Hyogo 650-8670 (JP)
(72) Inventor: OHIGE, Takashi, Kobe-shi, Hyogo 6508670 (JP); FUJIE, Masahiro, Kobe-shi, Hyogo 6508670 (JP)
(74) Representative: Müller-Boré & Partner Patentanwälte PartG mbB
(86) International application number: PCT/JP2019/024442
(87) International publication number: WO 2020/004209

(56) References cited:
- EP-A2- 1 464 452
- WO-A1-2014/148032
- JP-A- 2010 188 428
- JP-A- 2015 134 396
- BASILE F ET AL: "Task-oriented motion planning for multi-arm robotic systems", ROBOTICS AND COMPUTER INTEGRATED MANUFACTURING, ELSEVIER SCIENCE PUBLISHERS BV., BARKING, GB, vol. 28, no. 5, 27 February 2012 (2012-02-27), pages 569 - 582, XP028482635, ISSN: 0736-5845, [retrieved on 20120306], DOI: 10.1016/J.RCIM.2012.02.007

## Description

### TECHNICAL FIELD

The present disclosure relates to a robot control system.

### BACKGROUND ART

Conventionally, robot control systems for causing a plurality of robotic arms to operate collaboratively are known. One example of such robot control systems is disclosed as a transfer device of Patent Document 1.

The transfer device disclosed in Patent Document 1 includes a first robotic arm, a first controller connected to the first robotic arm via a control cable, a second robotic arm, and a second controller connected to the second robotic arm via a control cable. The first robotic arm is fixed inside a press machine while being placed on a carriage. The second robotic arm is suspended from a ceiling at a position where the second robotic arm opposes to the first robotic arm. The first controller and the second controller are connected to each other via a network cable so that data communication therebetween is possible. Therefore, the first robotic arm and the second robotic arm are caused to operate collaboratively so as to, for example, perform a work of pinching and lifting up of a workpiece.

Patent Document 2 discloses a system for controlling a plurality of robots and a method for controlling said system. Said system comprises a plurality of controllers, each having an associated motion system adapted to control attached robots, with each motion controller being able to receive motion instructions from at least one motion instruction source and at least one of said motion instruction sources being a control program, as well as a computer network over which said controllers communicate.

### [Reference Document of Conventional Art]

### [Patent Document]

| | |
|---|---|
| [Patent Document 1] | JP2004-209552A |
| [Patent Document 2] | EP 1 464 452 A2 |

### DESCRIPTION OF THE DISCLOSURE

### [Problem to be Solved by the Disclosure]

The transfer device of Patent Document 1 is provided with the first controller connected to the first robotic arm, the second controller connected to the second robotic arm, and the network cable (hereinafter, referred to as a "communication device") which connects between the first controller and the second controller, and thus, the first robotic arm and the second robotic arm are caused to operate collaboratively. However, in the robot control system disclosed in Patent Document 1, the work may not be performed accurately to the workpiece.

Therefore, one purpose of the present invention is to provide a robot control system capable of accurately performing a work to a workpiece.

### [Summary]

The problem is solved by the invention as defined in claim 1.

According to the invention, at least three robotic arms can be operated collaboratively and, as a result, the robot control system capable of accurately performing a work to a workpiece can be provided.

In addition, according to the invention, the robot control system capable of accurately performing the work to the workpiece can be provided with the simple configuration.

### BRIEF DESCRIPTION OF DRAWINGS

Fig. 1 is a schematic view illustrating the entire configuration of a robot control system according to Embodiment 1 of the present invention.
Fig. 2 is a front view illustrating a first robot of the robot control system according to Embodiment 1 of the present invention.
Fig. 3 is a block diagram illustrating the entire configuration of the robot control system of Embodiment 1 of the present invention.
Fig. 4 is a flowchart illustrating processing executed by the robot control system according to Embodiment 1 of the present invention.
Fig. 5 is a block diagram illustrating the entire configuration of a robot control system not according to the present invention.
Fig. 6 is a block diagram illustrating the entire configuration of a robot control system according to Embodiment 2 of the present invention.
Fig. 7 is a block diagram illustrating the entire configuration of a robot control system not according to the present invention.
Fig. 8 is a block diagram illustrating the entire configuration of a robot control system not according to the present invention.
Fig. 9 is a block diagram illustrating the entire configuration of a robot control system not according to the present invention.
Fig. 10 is a block diagram illustrating the entire configuration of a robot control system not according to the present invention.
Fig. 11 is a block diagram partially illustrating a modification of the robot control system according to one embodiment of the present invention.

### MODES FOR CARRYING OUT THE INVENTION

Below, a robot control system according to Embodiment 1 of the present invention is described with reference to the drawings. Note that the present invention is not limited to the embodiments described below. Moreover, below, the same reference characters are given to the same or corresponding elements throughout the drawings to omit redundant description.

### 1. Embodiment 1 (Example 1)

### (Robot Control System 10A)

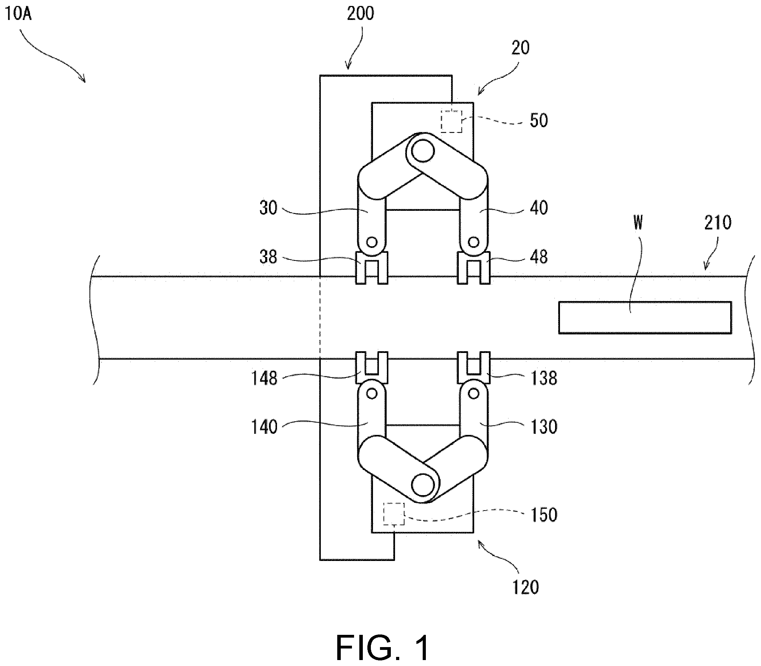

Fig. 1 is a schematic view illustrating the entire configuration of the robot control system according to Example 1 which is Embodiment 1 of the present invention. As illustrated in Fig. 1, a robot control system 10A according to this embodiment includes a first robot 20, a second robot 120, and a communication device 200 for data communication between a first controller 50 built in the first robot 20 and a second controller 150 built in the second robot 120. The first robot 20 and the second robot 120 are disposed so as to be opposed to each other having a conveyor belt 210 therebetween.

The robot control system 10A according to this embodiment is used for causing the first robot 20 and the second robot 120 to operate collaboratively so as to, for example, perform a work of pinching and lifting up a workpiece W which is transferred on the conveyor belt 210.

Note that the phrase "operate collaboratively" as used herein refers to operating a first robotic arm 30, a second robotic arm 40, a third robotic arm 130, and a fourth robotic arm 140 so that relative positions between a first tool 38 and a second tool 48, the first tool 38 and a third tool 138, and the first tool 38 and a fourth tool 148 do not change, respectively. Note that it is preferred to operate the first robotic arm 30, the second robotic arm 40, the third robotic arm 130, and the fourth robotic arm 140 so that, in addition to the relative positions, relative angles of respective tools do not change. Accordingly, a work such as pinching and lifting up the workpiece W can certainly be performed.

### (First Robot 20)

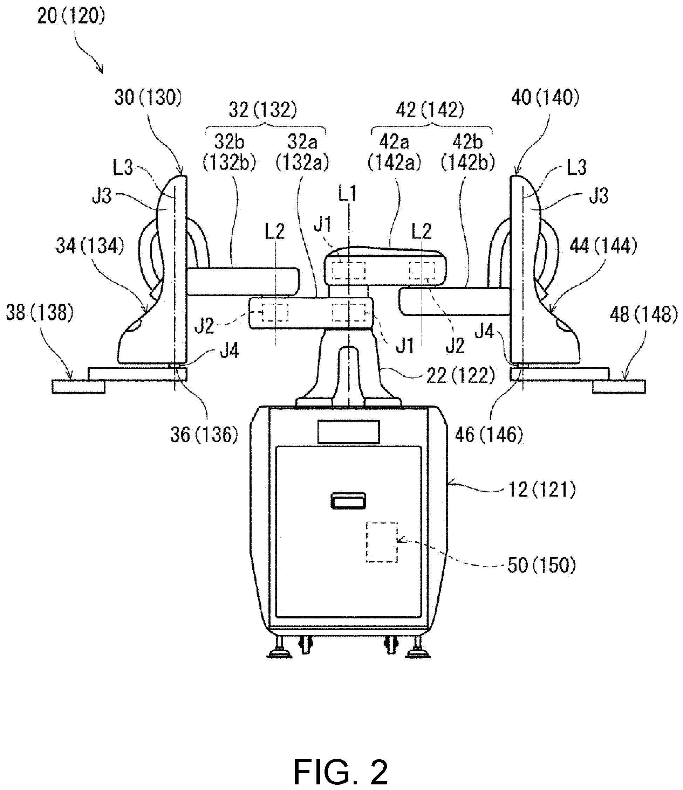

Fig. 2 is a front view illustrating the first robot of the robot control system according to this embodiment. As illustrated in Fig. 2, the first robot 20 includes a pedestal 21 fixed to a carriage, the first robotic arm 30 and the second robotic arm 40 supported by the pedestal 21, the first tool 38 attached to a tip-end part of the first robotic arm 30, the second tool 48 attached to a tip-end part of the second robotic arm 40, and the first controller 50 accommodated in the pedestal 21. The first robot 20 can be placed within a limited space corresponding to a space for one person (e.g., 610mm×620mm).

Below, a direction in which the first robotic arm 30 and the second robotic arm 40 are opened is referred to as a left-and-right direction, a direction parallel to an axial center of a base shaft is referred to as an up-and-down direction, and a direction perpendicular to the left-and-right direction and the up-and-down direction is referred to as a front-and-rear direction.

Each of the first robotic arm 30 (the robotic arm on the left in Fig. 2) and the second robotic arm 40 (the robotic arm on the right in Fig. 2) is a horizontal articulated robotic arm configured to be movable with respect to the pedestal 21.

The first robotic arm 30 is provided with a link 32 and a wrist part 34, and the first tool 38 is attached to the tip-end part of the first robotic arm 30.

In this example, the link 32 is comprised of a first link 32a and a second link 32b. The first link 32a is coupled to a base shaft 22 which is fixed to an upper surface of the pedestal 21 through a rotary joint J1 so as to be rotatable about a rotation axis L1 which passes through the axial center of the base shaft 22. The second link 32b is coupled to a tip-end part of the first link 32a through a rotary joint J2 so as to be rotatable about a rotation axis L2 which is defined at the tip-end part of the first link 32a.

The wrist part 34 has a mechanical interface 36 to which the first tool 38 is attached, and is coupled to a tip-end part of the second link 32b through a linear-motion joint J3 and a rotary joint J4. The wrist part 34 is ascendable and descendable with respect to the second link 32b through the linear-motion joint J3. The wrist part 34 is rotatable about a rotation axis L3 which is perpendicular to the second link 32b through the rotary joint 4.

The second robotic arm 40 has a similar structure to the first robotic arm 30. Therefore, similar description is suitably omitted. The second robotic arm 40 is provided with a link 42 and a wrist part 44, and the second tool 48 is attached to the tip-end part of the second robotic arm 40. In this example, the link 42 is comprised of a first link 42a and a second link 42b. The wrist part 44 has a mechanical interface 46 to which the second tool 48 is attached.

The first robotic arm 30 and the second robotic arm 40 having the structures as described above are each provided with driving servomotors (not illustrated) and encoders (not illustrated) which detect rotation angles of the servomotors so as to correspond to the joints J1-J4. Moreover, the rotation axis L1 of the first link 32a of the first robotic arm 30 and the rotation axis L1 of the first link 42a of the second robotic arm 40 are coaxial, and the first link 32a of the first robotic arm 30 and the first link 42a of the second robotic arm 40 are provided with a height difference therebetween.

The first tool 38 has a base part extending horizontally and connected to the mechanical interface 36 of the first robotic arm 30, and a holding part attached to a tip-end part of the base part. The first tool 38 can hold the workpiece W which is transferred by the conveyor belt 210 and the other parts attached to the workpiece W by pinching them using the holding part. Note that since the second tool 48 has a similar structure as the first tool 38, the description of the second tool 48 is not repeated.

### (Second Robot 120)

The second robot 120 has a similar structure as the first robot 20. Therefore, similar description and illustration for the second robot 120 are suitably omitted. Note that, in Fig. 2, reference characters to be given to the structure of the second robot 120 are indicated in brackets "()" after the corresponding reference characters.

As illustrated in Fig. 2, the second robot 120 is provided with a pedestal 121 fixed to a carriage, the third robotic arm 130 and the fourth robotic arm 140 supported by the pedestal 121, the third tool 138 attached to a tip-end part of the third robotic arm 130, the fourth tool 148 attached to a tip-end part of the fourth robotic arm 140, and the second controller 150 accommodated in the pedestal 121.

The third robotic arm 130 is provided with a link 132 and a wrist part 134, and the third tool 138 is attached to the tip-end part of the third robotic arm 130. In this example, the link 132 is comprised of a first link 132a and a second link 132b. The wrist part 134 has a mechanical interface 136 to which the third tool 138 is attached.

The fourth robotic arm 140 is provided with a link 142 and a wrist part 144, and the fourth tool 148 is attached to the tip-end part of the fourth robotic arm 140. In this example, the link 142 is comprised of a first link 142a and a second link 142b. The wrist part 144 has a mechanical interface 146 to which the fourth tool 148 is attached.

The third tool 138 has a base part extending horizontally and connected to the mechanical interface 136 of the third robotic arm 130, and a holding part attached to a tip-end part of the base part. Note that since the fourth tool 148 has a similar structure as the third tool 138, the description of the fourth tool 148 is not repeated.

### (First Controller 50)

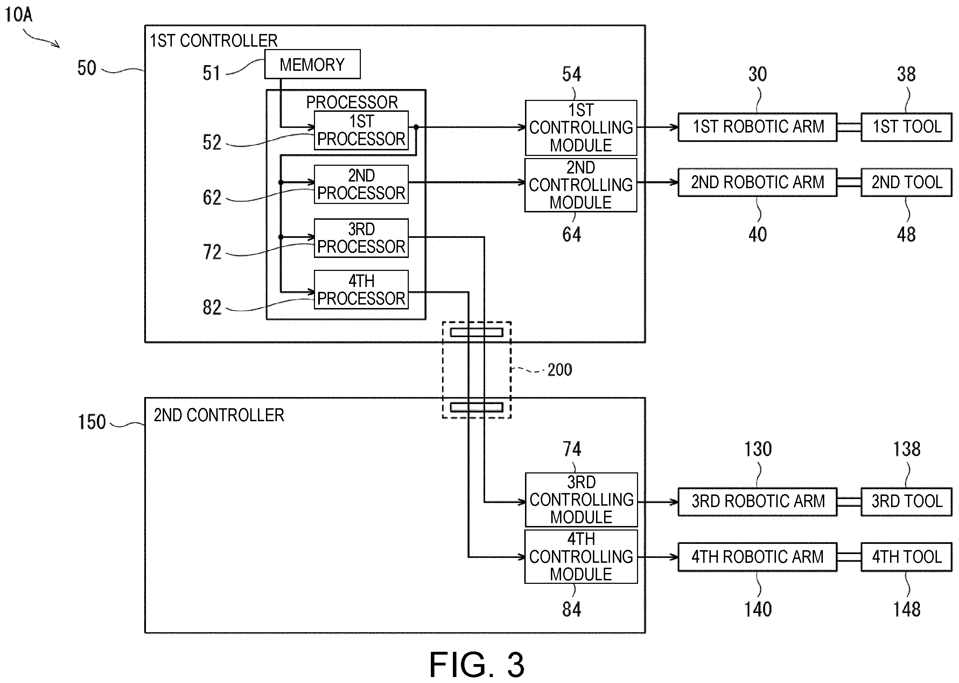

Fig. 3 is a block diagram illustrating the entire configuration of the robot control system 10A according to this embodiment. As illustrated in Fig. 3, the first controller 50 according to this embodiment includes a memory 51, a first processor 52 and a first controlling module 54. The first processor 52 creates, as output data, first positional data which is a position of the first tool 38 in a base coordinate system, based on an operation plan for the first robotic arm 30 which is stored in advance in the memory 51. The first controlling module 54, of which the preceding stage is the first processor 52, controls the operation of the first robotic arm 30 based on the first positional data which is the output data of the first processor 52.

Moreover, the first controller 50 according to this embodiment includes a second processor 62 and a second controlling module 64. The second processor 62, of which the preceding stage is the first processor 52, creates, as output data, second positional data in which a position of the second tool 48 does not change in a first-tool coordinate system defined by the first tool 38, based on the first positional data as the output data of the first processor 52. The second controlling module 64, of which the preceding stage is the second processor 62, controls the operation of the second robotic arm 40 based on the second positional data which is the output data of the second processor 62.

Moreover, the first controller 50 according to this embodiment includes a third processor 72 which creates third positional data in which a position of the third tool 138 does not change in the first-tool coordinate system.

The first controller 50 according to this embodiment also includes a fourth processor 82 which creates fourth positional data in which a position of the fourth tool 148 does not change in the first-tool coordinate system.

The first controller 50 may be implemented, for example, by a known processor (e.g., a CPU) operating in accordance with a program stored in a storage device (e.g., a memory).

### (Second Controller 150)

The second controller according to this embodiment includes a third controlling module 74 of which the preceding stage is the third processor 72, and which controls the operation of the third robotic arm 130 based on the third positional data as the output data of the third processor 72.

Moreover, the second controller 150 according to this embodiment includes a fourth controlling module 84 of which the preceding stage is the fourth processor 82, and which controls the operation of the fourth robotic arm 140 based on the fourth positional data as the output data of the fourth processor 82.

The second controller 150 may be implemented, for example, by a known processor (e.g., a CPU) operating in accordance with a program stored in a storage device (e.g., a memory).

### (Communication Device 200)

The communication device 200 may be a device having a LAN (Local Area Network) cable etc., which complies with the standards for Ethernet^{®}. However, the communication device 200 is not limited to this configuration, and may be a device with another cable which enables the data communication between the first controller 50 and the second controller 150, or may be wireless.

### (Input and Output of Each Positional Data)

The first controlling module 54 receives, not via the communication device 200, input of the first positional data as the output data from the first processor 52 which is the preceding stage of the first controlling module 54.

The second processor 62 receives, not via the communication device 200, input of the first positional data which is the output data of the first processor 52. The first processor 52 is the preceding stage of the second processor 62, and belongs to the first controller 50 to which the second processor 62 belongs. Moreover, the second controlling module 64 receives, not via the communication device 200, input of the second positional data which is the output data of the second processor 62. The second processor 62 is the preceding stage of the second controlling module 64, and belongs to the first controller 50 to which the second controlling module 64 belongs.

According to the configuration described above, the first controller 50 can cause the first robotic arm 30 and the second robotic arm 40 to operate collaboratively without a change in the relative position between the first tool 38 and the second tool 48. As described above, causing two robotic arms (here, the first robotic arm 30 and the second robotic arm 40) to operate collaboratively by one controller (here, the first controller 50) which is connected to these two robotic arms, is hereinafter referred to as an "inter-arms collaboration."

The third processor 72 receives, not via the communication device 200, input of the first positional data which is the output data of the first processor 52. The first processor 52 is the preceding stage of the third processor 72, and belongs to the first controller 50 to which the third processor 72 belongs. Moreover, the third controlling module 74 receives, via the communication device 200, input of the third positional data which is the output data of the third processor 72. The third processor 72 is the preceding stage of the third controlling module 74, and belongs to the first controller 50 to which the third controlling module 74 does not belong.

According to the configuration described above, the first controller 50 and the second controller 150 can cause the first robotic arm 30 and the third robotic arm 130 to operate collaboratively via the communication device 200. As described above, causing two robotic arms (here, the first robotic arm 30 and the third robotic arm 130) to operate collaboratively by two controllers (here, the first controller 50 and the second controller 150) which are connected to each other via the communication device 200, is hereinafter referred to as an "inter-communication collaboration."

The fourth processor 82 receives, not via the communication device 200, input of the first positional data which is the output data of the first processor 52. The first processor 52 is the preceding stage of the fourth processor 82, and belongs to the first controller 50 to which the fourth processor 82 belongs. Moreover, the fourth controller 84 receives, via the communication device 200, input of the fourth positional data which is the output data of the fourth processor 82. The fourth processor 82 is the preceding stage of the fourth controller 84, and belongs to the first controller 50 to which the fourth controller 84 does not belong.

According to the configuration described above, the first controller 50 and the second controller 150 can cause the first robotic arm 30 and the fourth robotic arm 140 to perform the inter-communication collaboration.

### (One Example of Processing Flow)

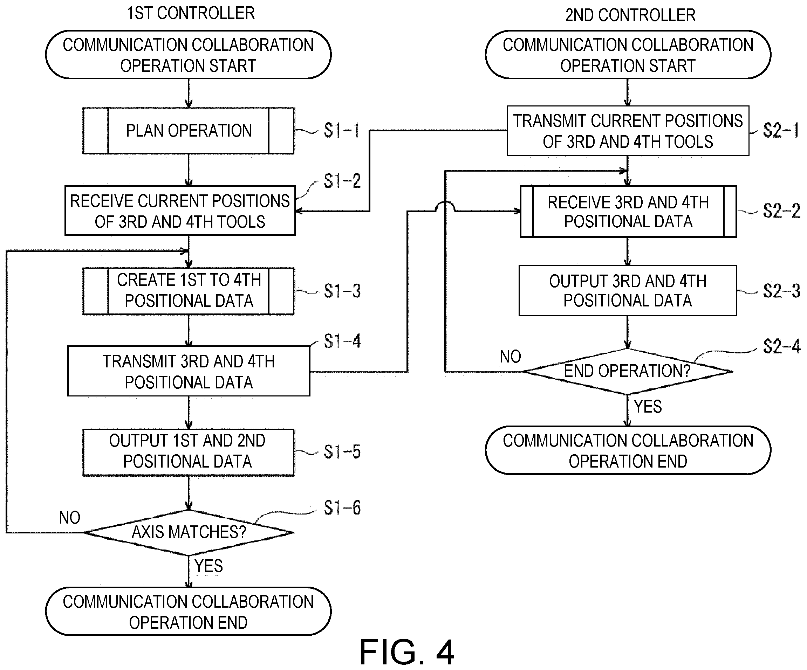

Next, referring to Fig. 4, one example of a flow of processing executed by the robot control system 10A according to this embodiment is described. Note that the first controller 50 can sequentially recognize the current position of the first tool 38 by sequentially receiving inputs of the rotation angles of the servomotors from the encoders provided to respective axes of the first robotic arm 30. Similarly, the first controller 50 can sequentially recognize the current position of the second tool 48 by sequentially receiving inputs of the rotation angles of the servomotors from the encoders provided to respective axes of the second robotic arm 40. Moreover, similarly, the second controller 150 can sequentially recognize the current positions of the third tool 138 and the fourth tool 148, respectively.

First, a processing flow of the first controller 50 illustrated on the left in Fig. 4 is described, and then, a processing flow of the second controller 150 illustrated on the right in Fig. 4 is described.

### (Processing Flow of First Controller 50)

First, when the first controller 50 starts a communication collaboration, the first controller 50 reads the operation plan for the first robotic arm 30 from the memory 51, and transmits it to the first processor 52 (Step S1-1). Note that when the first controller 50 starts the communication collaboration, the first controller 50 may execute data communication with the second controller 150 via the communication device 200 so that the first controller 50 and the second controller 150 recognize the execution of the communication collaboration with each other.

Next, the first controller 50 receives the current positions of the third tool 138 and the fourth tool 148 via the communication device 200 (Step S1-2). Note that for the first tool 38, the second tool 48, the third tool 138, and the fourth tool 148, initial positions at the time of starting the operation by the communication collaboration may be determined in advance, respectively.

That is, the first controller 50 may execute the processing at and after Step S1-2 after the first controller 50 controls the operation of the first robotic arm 30 so that the first tool 38 moves to the initial position determined in advance, and controls the operation of the second robotic arm 40 so that the second tool 48 moves to the initial position determined in advance. The communication collaboration with the second controller 150 may be started. Since this processing similarly applies to the second controller 150, the description is not repeated.

Moreover, the first controller 50 creates the first to fourth positional data (Step S1-3). In detail, the first processor 52 creates the first positional data as the output data, which is the position of the first tool 38 in the base coordinate system based on the operation plan read from the memory 51. Moreover, the second processor 62 creates the second positional data as the output data, in which the position of the second tool 48 does not change in the first-tool coordinate system, based on the first positional data. Moreover, the third processor 72 creates the third positional data as the output data, in which the position of the third tool 138 does not change in the first-tool coordinate system, based on the first positional data. Then, the fourth processor 82 creates the fourth positional data as the output data, in which the position of the fourth tool 148 does not change in the first-tool coordinate system, based on the first positional data.

Then, the first controller 50 transmits the third positional data and the fourth positional data to the second controller 150 via the communication device 200 (Step S1-4). In detail, the third processor 72 transmits the third positional data to the third controlling module 74 via the communication device 200. Moreover, the fourth processor 82 transmits the fourth positional data to the fourth controlling module 84 via the communication device 200.

Next, the first controller 50 outputs the first positional data and the second positional data (Step S1-5). In detail, the first processor 52 outputs the first positional data to the first controlling module 54 not via the communication device 200. Then, the first controlling module 54 controls the operation of the first robotic arm 30 based on the first positional data. Moreover, the second processor 62 outputs the second positional data to the second controlling module 64 not via the communication device 200. Then, the second controlling module 64 controls the operation of the second robotic arm 40 based on the second positional data.

Finally, the first controller 50 confirms whether the axis matches, and when the axis matches (Step S1-6: YES), the first controller 50 ends the operation by the communication collaboration, and when the axis does not match (Step S1-6: NO), the first controller 50 returns to Step S1-3 and continues the operation by the communication collaboration. Note that the phrase "confirms whether the axis matches" as used herein refers to confirming by the first controller 50, which is a master-side controller, whether the first tool 38 reaches a target position (whether the axis matches). That is, the first controller 50 ends the calculations of the positions for one cycle when the first tool 38 reaches the target position (Step S1-6: YES).

### (Processing Flow of Second Controller 150)

First, when the second controller 150 starts the communication collaboration, the second controller 150 transmits the current positions of the third tool 138 and the fourth tool 148 to the first controller 50 via the communication device 200 (Step S2-1).

Next, the second controller 150 receives the third positional data and the fourth positional data from the first controller 50 via the communication device 200 (Step S2-2). In detail, the third controlling module 74 receives the third positional data from the third processor 72 via the communication device 200. Moreover, the fourth controlling module 84 receives the fourth positional data from the fourth processor 82 via the communication device 200.

Moreover, the second controller 150 outputs the third positional data and the fourth positional data (Step S2-3). In detail, the third processor 72 outputs the third positional data to the third controlling module 74 via the communication device 200. Then the third controlling module 74 controls the operation of the third robotic arm 130 based on the third positional data. Moreover, the fourth processor 82 outputs the fourth positional data to the fourth controlling module 84 via the communication device 200. Then the fourth controlling module 84 controls the operation of the fourth robotic arm 140 based on the fourth positional data.

Finally, the first controller 50 confirms whether to end the operation, and when confirmed to end the operation (Step S2-4: YES), the operation by the communication collaboration is finished, and when confirmed not to end the operation (Step S2-4: NO), the processing returns to Step S2-2 and the operation by the communication collaboration continues. Note that the phrase "confirms whether to end the operation" as used herein refers to confirming whether or not the second controller 150 (the slave-side controller) receives a command to end the calculations of the positions from the first controller 50 (the master-side controller). That is, the second controller 150 ends the communication collaboration when it receives the command to end the calculations of the positions from the first controller 50 (Step S2-4: YES).

### (Effects)

The robot control system 10A according to this embodiment can cause the four robotic arms (i.e., the first robotic arm 30, the second robotic arm 40, the third robotic arm 130, and the fourth robotic arm 140) to operate collaboratively. Therefore, it is possible to perform more securely the work such as pinching and lifting up the workpiece W transferred on the conveyor belt 210, compared with a case two robotic arms operate collaboratively. As a result, the robotic control system 10A capable of accurately performing the work to the workpiece W can be provided.

Here, conventionally, robot control systems which cause two robotic arms to operate collaboratively by executing only the inter-arms collaboration are known. Moreover, robot control systems which cause two robotic arms to operate collaboratively by executing only the inter-communication collaboration are also known. However, robot control systems which execute both of the inter-arms collaboration and the inter-communication collaboration are not known.

The robot control system 10A according to this embodiment can cause the first robotic arm 30 and the second robotic arm 40 to operate by the inter-arms collaboration by the first controller 50 connected to the first robotic arm 30 and the second robotic arm 40. Moreover, by connecting the first controller 50 and the second controller 150 via the communication device 200, the first robotic arm 30 and the third robotic arm 130 can be caused to operate by the inter-communication collaboration, and the first robotic arm 30 and the fourth robotic arm 140 can be caused to operate by the inter-communication collaboration.

Therefore, the robot control system 10A according to this embodiment can cause at least three or more robotic arms to operate collaboratively by executing both of the inter-arms collaboration and the inter-communication collaboration. Thus, for example, as illustrated in Fig. 1, it is possible to cause the first robotic arm 30, the second robotic arm 40, the third robotic arm 130, and the fourth robotic arm 140 to operate collaboratively while disposing the first robot 20 which is a dual-arm robot and the second robot 120 which is also a dual-arm robot so as to be opposed to each other having the conveyor belt 210 therebetween. Accordingly, since the robot control system 10A according to this embodiment can be achieved by, for example, improving the existing device, the robot control system 10A can be manufactured easily.

Moreover, in the robot control system 10A according to this embodiment, since all of the first processor 52, the second processor 62, the third processor 72, and the fourth processor 82 are provided to the first controller 50, the robot control system 10A with the simple configuration can be provided.

### 2. Example 2

### (Robot Control System 10B)

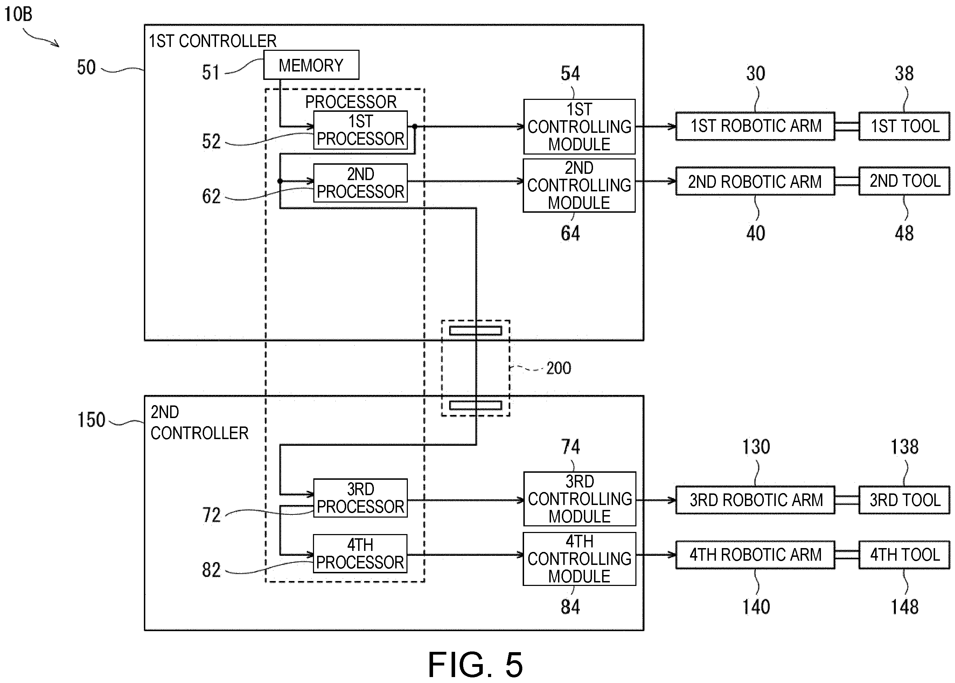

Next, a robot control system according to Example 2 not according to the present invention is described with reference to Fig. 5. Fig. 5 is a block diagram illustrating the entire configuration of the robot control system according to this example. Note that configurations of a robot control system 10B according to this example are similar to the configurations of the robot control system 10A according to Embodiment 1 described above, except for the configurations of the first controller 50 and the second controller 150. Therefore, the same reference characters are given to the same components, and similar description is not repeated.

### (First Controller 50)

As illustrated in Fig. 5, the first controller 50 according to this example includes the memory 51, the first processor 52, and the first controlling module 54 similar to the robot control system 10A according to Embodiment 1. Therefore, similar description is not repeated here.

Moreover, the first controller 50 according to this example includes the second processor 62 and the second controlling module 64 similar to the robot control system 10A according to Embodiment 1. Therefore, similar description is not repeated here.

### (Second Controller 150)

The second controller 150 according to this example includes the third processor 72 and the third controlling module 74. The third processor 72 creates the third positional data in which the position of the third tool 138 does not change in the first-tool coordinate system. The third controlling module 74 of which the preceding stage is the third processor 72, controls the operation of the third robotic arm 130 based on the third positional data which is the output data of the third processor 72.

Moreover, the second controller 150 according to this example includes the fourth processor 82 and the fourth controlling module 84. The fourth processor 82 of which the preceding stage is the third processor 72, creates the fourth positional data in which the position of the fourth tool 148 does not change in a third-tool coordinate system. The third-tool coordinate system is defined by the third tool 138 based on the third positional data which is the output data of the third processor 72. The fourth controlling module 84 of which the preceding stage is the fourth processor 82, controls the operation of the fourth robotic arm 140 based on the fourth positional data which is the output data of the fourth processor 82.

### (Input and Output of Each Positional Data)

The first controlling module 54 receives, not via the communication device 200, input of the first positional data as the output data from the first processor 52 which is the preceding stage of the first controlling module 54.

The second processor 62 receives, not via the communication device 200, input of the first positional data which is the output data of the first processor 52. The first processor 52 is the preceding stage of the second processor 62, and belongs to the first controller 50 to which the second processor 62 belongs. Moreover, the second controlling module 64 receives, not via the communication device 200, the second positional data which is the output data of the second processor 62. The second processor 62 is the preceding stage of the second controlling module 64, and belongs to the first controller 50 to which the second controlling module 64 belongs.

According to the configuration described above, the first controller 50 can cause the first robotic arm 30 and the second robotic arm 40 to operate by the inter-arms collaboration.

The third processor 72 receives, via the communication device 200, the first positional data which is the output data of the first processor 52. The first processor 52 is the preceding stage of the third processor 72, and belongs to the first controller 50 to which the third processor 72 does not belong. Moreover, the third controlling module 74 receives, not via the communication device 200, the third positional data which is the output data of the third processor 72. The third processor 72 is the preceding stage of the third controlling module 74, and belongs to the second controller 150 to which the third controlling module 74 belongs.

According to the configuration described above, the first controller 50 and the second controller 150 can cause the first robotic arm 30 and the third robotic am 130 to operate by the inter-communication collaboration.

The fourth processor 82 receives, via the communication device 200, the first positional data which is the output data of the first processor 52. The first processor 52 is the preceding stage of the fourth processor 82, and belongs to the first controller 50 to which the fourth processor 82 does not belong. Moreover, the fourth controlling module 84 receives, not via the communication device 200, the fourth positional data which is the output data of the fourth processor 82. The fourth processor 82 is the preceding stage of the fourth controlling module 84, and belongs to the second controller 150 to which the fourth controlling module 84 belongs.

According to the configuration described above, the first controller 50 and the second controller 150 can cause the first robotic arm 30 and the fourth robotic arm 140 to operate by the inter-communication collaboration.

### (Effects)

**In** the robot control system 10B according to this configuration, the first processor 52 and the second processor 62 are provided to the first controller 50, and the third processor 72 and the fourth processor 82 are provided to the second controller 150. That is, in the robot control system 10B according to this example, the processors are provided distributedly to the first controller 50 and the second controller 150. As a result, the robot control system 10B according to this example can accurately perform the work to the workpiece W, and the processing load can be distributed to the first controller 50 and the second controller 150.

### 3. Embodiment 2 (Example 3)

### (Robot Control System 10C)

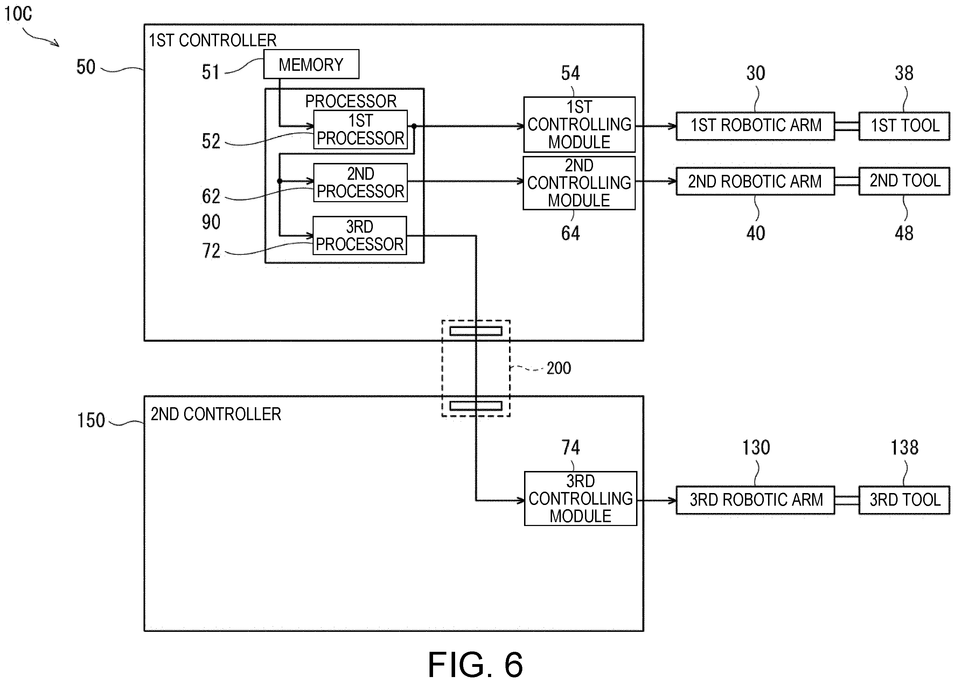

Next, a robot control system according to Example 3 which is Embodiment 2 of the present invention is described with reference to Fig. 6. Fig. 6 is a block diagram illustrating the entire configuration of the robot control system according to this embodiment. Note that configurations of a robot control system 10C according to this embodiment are similar to the configurations of the robot control system 10A according to Embodiment 1 described above, except for the configurations of the first controller 50 and the second controller 150, and the second robot 120 not including the fourth robotic arm 140 and the fourth tool 148. Therefore, the same reference characters are given to the same components, and similar description is not repeated.

### (First Controller 50)

As illustrated in Fig. 6, the first controller 50 according to this configuration includes the memory 51, the first processor 52, and the first controlling module 54 similar to the robot control systems 10A and 10B according to Examples 1 and 2, respectively. Therefore, similar description is not repeated here.

Moreover, the first controller 50 according to this embodiment includes the second processor 62 and the second controlling module 64 similar to the robot control systems 10A and 10B according to Examples 1 and 2, respectively. Therefore, similar description is not repeated here.

Moreover, the first controller 50 according to this embodiment includes the third processor 72 which creates the third positional data in which the position of the third tool 138 does not change in the first-tool coordinate system.

### (Second Controller 150)

The second controller 150 according to this embodiment includes the third controlling module 74 of which the preceding stage is the third processor 72, and which controls the operation of the third robotic arm 130 based on the third positional data as the output data of the third processor 72.

### (Input and Output of Each Positional Data)

The first controlling module 54 receives, not via the communication device 200, input of the first positional data as the output data from the first processor 52 which is the preceding stage of the first controlling module 54.

The second processor 62 receives, not via the communication device 200, input of the first positional data which is the output data of the first processor 52. The first processor 52 is the preceding stage of the second processor 62, and belongs to the first controller 50 to which the second processor 62 belongs. Moreover, the second controlling module 64 receives, not via the communication device 200, input of the second positional data which is the output data of the second processor 62. The second processor 62 is the preceding stage of the second controlling module 64, and belongs to the first controller 50 to which the second controlling module 64 belongs.

According to the configuration described above, the first controller 50 can cause the first robotic arm 30 and the second robotic arm 40 to operate by the inter-arms collaboration.

The third processor 72 receives, not via the communication device 200, input of the first positional data which is the output data of the first processor 52. The first processor 52 is the preceding stage of the third processor 72, and belongs to the first controller 50 to which the third processor 72 belongs.

According to the configuration described above, the first controller 50 and the second controller 150 can cause the first robotic arm 30 and the third robotic arm 130 to operate by the inter-communication collaboration.

### (Effects)

The robot control system 10C according to this embodiment is different from the robot control systems 10A and 10B described above in that the robot control system 10C does not include the fourth robotic arm 140 and includes only the three robotic arms. Even in such a configuration, the work such as pinching and lifting up the workpiece W transferred on the conveyor belt 210 can be performed more securely compared with the case two robotic arms operate collaboratively.

Moreover, in the robot control system 10C according to this configuration, since all of the first processor 52, the second processor 62, and the third processor 72 are provided to the first controller 50, the work can be accurately performed to the workpiece W, and the robot control system 10C with the simple configuration can be provided.

### 4. Example 4

### (Robot Control System 10D)

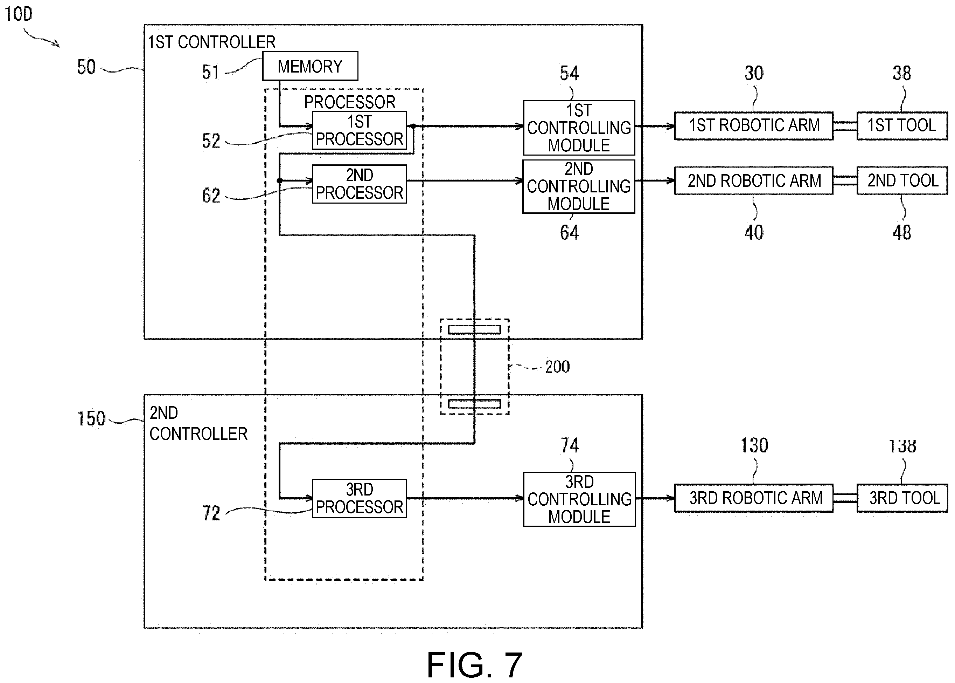

Next, a robot control system according to Example 4 not according to the present invention is described with reference to Fig. 7. Fig. 7 is a block diagram illustrating the entire configuration of the robot control system according to this example. Note that configurations of a robot control system 10D according to this example are similar to the configurations of the robot control system 10C according to Example 3 described above, except for the configurations of the first controller 50 and the second controller 150. Therefore, the same reference characters are given to the same components, and similar description is not repeated.

### (First Controller 50)

As illustrated in Fig. 7, the first controller 50 according to this configuration includes the memory 51, the first processor 52, and the first controlling module 54 similar to the robot control systems 10A-10C according to Examples 1-3, respectively. Therefore, similar description is not repeated here.

Moreover, the first controller 50 according to this example includes the second processor 62 and the second controlling module 64 similar to the robot control systems 10A-10C according to Examples 1-3, respectively. Therefore, similar description is not repeated here.

Moreover, the first controller 50 according to this example includes the second processor 62 which creates, as output data, the second positional data in which the position of the second tool 48 does not change in the first-tool coordinate system, and the second controlling module 64 of which the preceding stage is the second processor 62, and which controls the operation of the second robotic arm 40 based on the second positional data as the output data of the second processor 62.

### (Second Controller 150)

The second controller 150 according to this example includes the third processor 72 and the third controlling module 74. The third processor 72 creates the third positional data in which the position of the third tool 138 does not change in the first-tool coordinate system. The third controlling module 74 of which the preceding stage is the third processor 72, controls the operation of the third robotic arm 130 based on the third positional data which is the output data of the third processor 72.

### (Input and Output of Each Positional Data)

The first controlling module 54 receives, not via the communication device 200, input of the first positional data as the output data from the first processor 52 which is the preceding stage of the first controlling module 54.

The second processor 62 receives, not via the communication device 200, input of the first positional data which is the output data of the first processor 52. The first processor 52 is the preceding stage of the second processor 62, and belongs to the first controller 50 to which the second processor 62 belongs. Moreover, the second controlling module 64 receives, not via the communication device 200, input of the second positional data which is the output data of the second processor 62. The second processor 62 is the preceding stage of the second controlling module 64, and belongs to the first controller 50 to which the second controlling module 64 belongs.

According to the configuration described above, the first controller 50 can cause the first robotic arm 30 and the second robotic arm 40 to operate by the inter-arms collaboration.

The third processor 72 receives, via the communication device 200, input of the first positional data which is the output data of the first processor 52. The first processor 52 is the preceding stage of the third processor 72, and belongs to the first controller 50 to which the third processor 72 does not belong.

According to the configuration described above, the first controller 50 and the second controller 150 can cause the first robotic arm 30 and the third robotic arm 130 to operate by the inter-communication collaboration.

### (Effects)

The robot control system 10D according to this example is different from the robot control systems 10A and 10B described above in that the robot control system 10D does not include the fourth robotic arm 140 and includes only the three robotic arms. Even in such a configuration, the work such as pinching and lifting up the workpiece W transferred on the conveyor belt 210 can be performed more securely compared with the case two robotic arms operate collaboratively.

Moreover, in the robot control system 10D according to this configuration, the first processor 52 and the second processor 62 are provided to the first controller 50, and the third processor 72 is provided to the second controller 150. That is, in the robot control system 10B according to this example, the processors are provided distributedly to the first controller 50 and the second controller 150. As a result, the work can be accurately performed to the workpiece W, and the processing load can be distributed to the first controller 50 and the second controller 150.

### 5. Example 5

### (Robot Control System 10E)

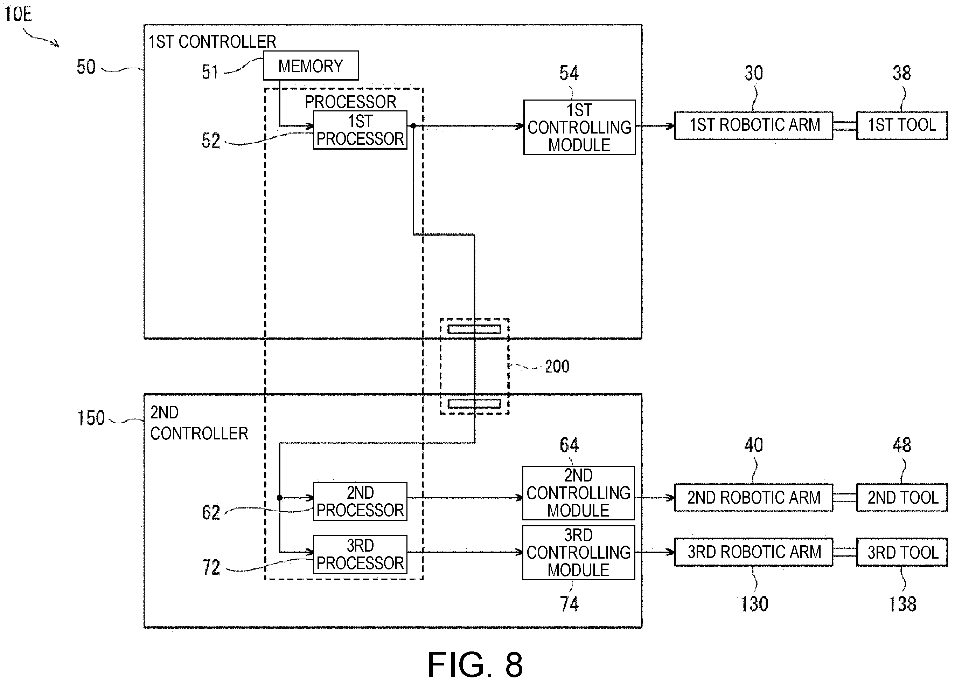

Next, a robot control system according to Example 5 not according to the present invention is described with reference to Fig. 8. Fig. 8 is a block diagram illustrating the entire configuration of the robot control system according to this example. Note that configurations of a robot control system 10E according to this example are similar to the configurations of the robot control systems 10C and 10D according to Examples 3 and 4 described above, except for the configurations of the first controller 50 and the second controller 150, and the second robot 120 including the fourth robotic arm 140 and the fourth tool 148. Therefore, the same reference characters are given to the same components, and similar description is not repeated.

### (First Controller 50)

As illustrated in Fig. 8, the first controller 50 according to this configuration includes the memory 51, the first processor 52, and the first controlling module 54 similar to the robot control systems 10A-10D according to Examples 1-4, respectively. Therefore, similar description is not repeated here.

### (Second Controller 150)

The second controller 150 according to this example includes the second processor 62 and the second controlling module 64. The second processor 62 creates, as output data, the second positional data in which the position of the second tool 48 does not change in the first-tool coordinate system. The second controlling module 64 of which the preceding stage is the second processor 62, controls the operation of the second robotic arm 40 based on the second positional data which is the output data of the second processor 62.

Moreover, the second controller 150 according to this example includes the third processor 72 and the third controlling module 74. The third processor 72 creates the third positional data in which the position of the third tool 138 does not change in the first-tool coordinate system. The third controlling module 74 of which the preceding stage is the third processor 72, controls the operation of the third robotic arm 130 based on the third positional data which is the output data of the third processor 72.

### (Input and Output of Each Positional Data)

The first controlling module 54 receives, not via the communication device 200, input of the first positional data as the output data from the first processor 52 which is the preceding stage of the first controlling module 54.

The second processor 62 receives, via the communication device 200, input of the first positional data which is the output data of the first processor 52. The first processor 52 is the preceding stage of the second processor 62, and belongs to the first controller 50 to which the second processor 62 does not belong. Moreover, the second controlling module 64 receives, not via the communication device 200, input of the second positional data which is the output data of the second processor 62. The second processor 62 is the preceding stage of the second controlling module 64, and belongs to the second controller 150 to which the second controlling module 64 belongs.

According to the configuration described above, the first controller 50 and the second controller 150 can cause the first robotic arm 30 and the second robotic arm 40 to operate by the inter-communication collaboration.

The third processor 72 receives, via the communication device 200, input of the first positional data which is the output data of the first processor 52. The first processor 52 is the preceding stage of the third processor 72, and belongs to the first controller 50 to which the third processor 72 does not belong. Moreover, the third controlling module 74 receives, not via the communication device 200, input of the third positional data which is the output data of the third processor 72. The third processor 72 is the preceding stage of the third controlling module 74, and belongs to the second controller 150 to which the third controlling module 74 belongs.

According to the configuration described above, the first controller 50 and the second controller 150 can cause the first robotic arm 30 and the third robotic arm 130 to operate by the inter-communication collaboration.

### (Effects)

The effects achieved by the robot control system 10E according to this example is the same as the robot control system 10D described above, and thus, the description is not repeated.

### 6. Example 6

### (Robot Control System 10F)

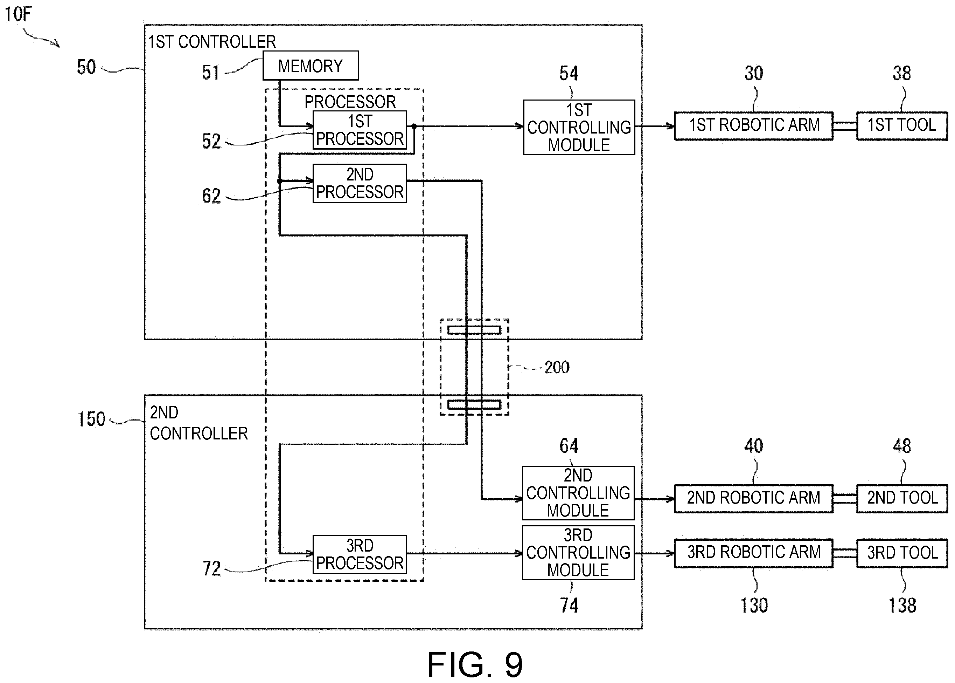

Next, a robot control system according to Example 6 not according to the present invention is described with reference to Fig. 9. Fig. 9 is a block diagram illustrating the entire configuration of the robot control system according to this example. Note that configurations of a robot control system 10F according to this example are similar to the configurations of the robot control system 10E according to Example 5 described above, except for the configurations of the first controller 50 and the second controller 150. Therefore, the same reference characters are given to the same components, and similar description is not repeated.

### (First Controller 50)

As illustrated in Fig. 9, the first controller 50 according to this configuration includes the memory 51, the first processor 52, and the first controlling module 54 similar to the robot control systems 10A-10E according to Examples 1-5, respectively. Therefore, similar description is not repeated here.

Moreover, the first controller 50 according to this example includes the second processor 62 similar to the robot control systems 10A-10D according to Examples 1-4. Therefore, similar description is not repeated here.

### (Second Controller 150)

The second controller 150 according to this example includes the second controlling module 64 of which the preceding stage is the second processor 62, and which controls the operation of the second robotic arm 40 based on the second positional data as the output data of the second processor 62.

Moreover, the second controller 150 according to this example includes the third controlling module 74 which creates the third positional data in which the position of the third tool 138 does not change in the first-tool coordinate system.

### (Input and Output of Each Positional Data)

The first controlling module 54 receives, not via the communication device 200, input of the first positional data as the output data from the first processor 52 which is the preceding stage of the first controlling module 54.

The second processor 62 receives, not via the communication device 200, input of the first positional data which is the output data of the first processor 52. The first processor 52 is the preceding stage of the second processor 62, and belongs to the first controller 50 to which the second processor 62 belongs. Moreover, the second controlling module 64 receives, via the communication device 200, input of the second positional data which is the output data of the second processor 62. The second processor 62 is the preceding stage of the second controlling module 64, and belongs to the first controller 50 to which the second controlling module 64 does not belong.

According to the configuration described above, the first controller 50 and the second controller 150 can cause the first robotic arm 30 and the second robotic arm 40 to operate by the inter-communication collaboration.

The third processor 72 receives, via the communication device 200, input of the first positional data which is the output data of the first processor 52. The first processor 52 is the preceding stage of the third processor 72, and belongs to the first controller 50 to which the third processor 72 does not belong. Moreover, the third controlling module 74 receives, not via the communication device 200, input of the third positional data which is the output data of the third processor 72. The third processor 72 is the preceding stage of the third controlling module 74, and belongs to the second controller 150 to which the third controlling module 74 belongs.

According to the configuration described above, the first controller 50 and the second controller 150 can cause the first robotic arm 30 and the third robotic arm 130 to operate by the inter-communication collaboration.

### (Effects)

The effects achieved by the robot control system 10F according to this example is the same as the robot control systems 10D and 10E described above, and thus, the description is not repeated.

### 7. Example 7

### (Robot Control System 10G)

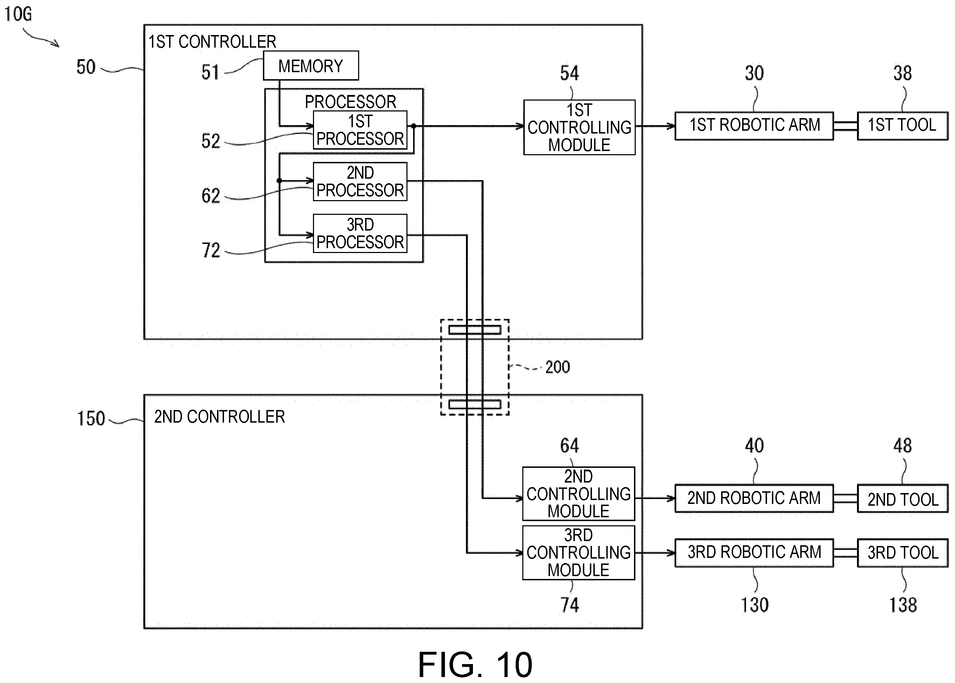

Next, a robot control system according to Example 7 not according to the present invention is described with reference to Fig. 10. Fig. 10 is a block diagram illustrating the entire configuration of the robot control system according to this example. Note that configurations of a robot control system 10G according to this example are similar to the configurations of the robot control systems 10E and 10F according to Examples 5 and 6 described above, except for the configurations of the first controller 50 and the second controller 150. Therefore, the same reference characters are given to the same components, and similar description is not repeated.

### (First Controller 50)

As illustrated in Fig. 10, the first controller 50 according to this configuration includes the memory 51, the first processor 52, and the first controlling module 54 similar to the robot control systems 10A-10F according to Examples 1-6, respectively. Therefore, similar description is not repeated here.

Moreover, the first controller 50 according to this example includes the second processor 62 similar to the robot control systems 10A-10D according to Embodiments 1-4, and the robot control system 10E according to Example 6. Therefore, similar description is not repeated here.

Moreover, the first controller 50 according to this example includes the third processor 72 which creates the third positional data in which the position of the third tool 138 does not change in the first-tool coordinate system.

### (Second Controller 150)

The second controller 150 according to this example includes the second controlling module 64 and the third controlling module 74. The second controlling module 64 of which the preceding stage is the second processor 62, controls the operation of the second robotic arm 40 based on the second positional data which is the output data of the second processor 62. The third controlling module 74 of which the preceding stage is the third processor 72, controls the operation of the third robotic arm 130 based on the third positional data which is the output data of the third processor 72.

### (Input and Output of Each Positional Data)

The first controlling module 54 receives, not via the communication device 200, input of the first positional data as the output data from the first processor 52 which is the preceding stage of the first controlling module 54.

The second processor 62 receives, not via the communication device 200, input of the first positional data which is the output data of the first processor 52. The first processor 52 is the preceding stage of the second processor 62, and belongs to the first controller 50 to which the second processor 62 belongs. Moreover, the second controlling module 64 receives, via the communication device 200, input of the second positional data which is the output data of the second processor 62. The second processor 62 is the preceding stage of the second controlling module 64, and belongs to the first controller 50 to which the second controlling module 64 does not belong.

According to the configuration described above, the first controller 50 and the second controller 150 can cause the first robotic arm 30 and the second robotic arm 40 to operate by the inter-communication collaboration.

The third processor 72 receives, not via the communication device 200, input of the first positional data which is the output data of the first processor 52. The first processor 52 is the preceding stage of the third processor 72, and belongs to the first controller 50 to which the third processor 72 belongs. Moreover, the third controlling module 74 receives, via the communication device 200, input of the third positional data which is the output data of the third processor 72. The third processor 72 is the preceding stage of the third controlling module 74, and belongs to the first controller 50 to which the third controlling module 74 does not belong.

According to the configuration described above, the first controller 50 and the second controller 150 can cause the first robotic arm 30 and the third robotic arm 130 to operate by the inter-communication collaboration.

### (Effects)

In the robot control system 10G according to this example, since all of the first processor 52, the second processor 62, and the third processor 72 are provided to the first controller 50, the robot control system 10G can accurately perform the work to the workpiece W, and can be a simple configuration.

### 8. Modifications

It is apparent for a person skilled in the art from the above description that many improvements and other embodiments of the present invention are possible. Therefore, the above description is to be interpreted only as illustration, and it is provided in order to teach a person skilled in the art the best mode that implements the present invention. The details of the structures and/or the functions may be substantially changed, without departing from the spirit of the present invention.

For example, in Embodiment 2 (Example 3), the second robot 120 may be provided with the fourth robotic arm 140 and the fourth tool 148 which is attached to the fourth robotic arm 140.

Then, the first controller 50 may include the fourth processor 82 which creates the fourth positional data. The fourth positional data may be data in which the position of the fourth tool 148 does not change in the first-tool coordinate system. Alternatively, the fourth positional data may be data in which the position of the fourth tool 148 does not change in a second-tool coordinate system defined by the second tool 48, based on the second positional data which is the output data of the second processor 62 as the preceding stage of the fourth processor 82. Alternatively, the fourth positional data may be data in which the position of the fourth tool 148 does not change in the third-tool coordinate system defined by the third tool 138, based on the third positional data which is the output data of the third processor 72 as the preceding stage of the fourth processor 82.

Moreover, the second controller 150 may include the fourth controlling module 84 of which the preceding stage is the fourth processor 82, and which controls the operation of the fourth robotic arm 140 based on the fourth positional data as the output data of the fourth processor 82.

In the respective cases described above, the fourth processor 82 may receive, not via the communication device 200, input of the first positional data which is the output data of the first processor 52. The first processor 52 is the preceding stage of the fourth processor 82, and belongs to the first controller 50 to which the fourth processor 82 belongs. Alternatively, the fourth processor 82 may receive, not via the communication device 200, input of the second positional data which is the output data of the second processor 62. The second processor 62 is the preceding stage of the fourth processor 82, and belongs to the first controller 50 to which the fourth processor 82 belongs. Alternatively, the fourth processor 82 may receive, not via the communication device 200, input of the third positional data which is the output data of the third processor 72. The third processor 72 is the preceding stage of the fourth processor 82, and belongs to the first controller 50 to which the fourth processor 82 belongs.

Moreover, in the cases described above, the fourth controlling module 84 receives, via the communication device 200, input of the fourth positional data which is the output data of the fourth processor 82. The fourth processor 82 is the preceding stage of the fourth controlling module 84, and belongs to the first controller 50 to which the fourth controlling module 84 does not belong.

Note that, in Embodiment 2 (Example 3), the second controller 150 may include the fourth processor 82 and the fourth controlling module 84.

In this case, the fourth processor 82 may receive, via the communication device 200, input of the first positional data which is the output data of the first processor 52. The first processor 52 is the preceding stage of the fourth processor 82, and belongs to the first controller 50 to which the fourth processor 82 does not belong. Alternatively, the fourth processor 82 may receive, via the communication device 200, input of the second positional data which is the output data of the second processor 62. The second processor 62 is the preceding stage of the fourth processor 82, and belongs to the first controller 50 to which the fourth processor 82 does not belong. Alternatively, the fourth processor 82 may receive, via the communication device 200, input of the third positional data which is the output data of the third processor 72. The third processor 72 is the preceding stage of the fourth processor 82, and belongs to the first controller 50 to which the fourth processor 82 does not belong.

Moreover, in the cases described above, the fourth controlling module 84 receives, not via the communication device 200, input of the fourth positional data which is the output data of the fourth processor 82. The fourth processor 82 is the preceding stage of the fourth controlling module 84, and belongs to the second controller 150 to which the fourth controlling module 84 belongs.

Note that also in Examples 4-7, similar to the modifications of Embodiment 2 (Example 3), the first robot 20 or the second robot 120 may be provided with the fourth robotic arm 140, the fourth tool 148 attached to the fourth robotic arm 140, the fourth processor 82 which creates the fourth positional data, and the fourth controlling module 84 which controls the operation of the fourth robotic arm 140 based on the fourth positional data. Here, description is not repeated since it is similar to the description for the modifications of Embodiment 2 (Example 3).

Although in Examples 3-7 described above the third processor 72 creates the third positional data in which the position of the third tool 138 does not change in the first-tool coordinate system, it is not limited to this configuration. For example, the third processor 72 may create the third positional data in which the position of the third tool 138 does not change in the second-tool coordinate system.

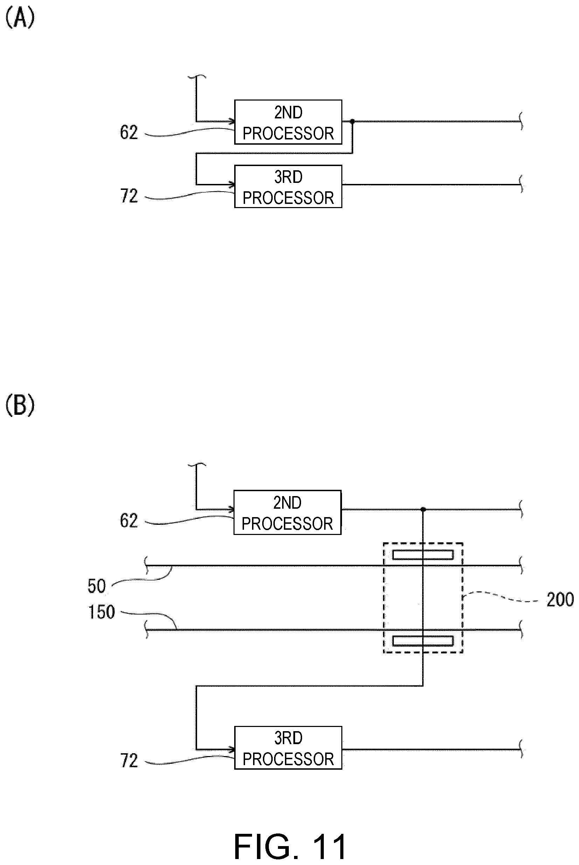

Fig. 11 is a block diagram partially illustrating a case the third processor 72 creates the third positional data in which the position of the third tool 138 does not change in the second-tool coordinate system. (A) is a diagram illustrating a case the third processor receives, not via the communication device, input of the second positional data from the second processor. Moreover, (B) is a diagram illustrating a case the third processor receives, via the communication device, input of the second positional data from the second processor.

Among the robot control systems 10C-10G according to Examples 3-7 described above, the robot control systems 10C, 10E, and 10G according to Examples 3, 5, and 7 are configured as illustrated in Fig. 11(A), in which the second processor 62 and the third processor 72 are provided to the same controller (i.e., one of the first controller 50 and the second controller 150).

As illustrated in Fig. 11(A), in the robot control systems 10C, 10E, and 10G according to Examples 3, 5, and 7, the third processor 72 receives, not via the communication device 200, input of the second positional data which is the output data of the second processor 62. The second processor 62 is the preceding stage of the third processor 72, and belongs to the controller to which the third processor 72 belongs (i.e., one of the first controller 50 and the second controller 150).

On the other hand, among the robot control systems 10C-10G according to Examples 3-7 described above, the robot control systems 10D and 10F according to Examples 4 and 6 are configured as illustrated in Fig. 11(b), in which the second processor 62 and the third processor 72 are provided to the different controllers (i.e., distributed to the first controller 50 and the second controller 150, respectively).

As illustrated in Fig. 11(B), in the robot control systems 10D and 10F according to Examples 4 and 6, the third processor 72 receives, via the communication device 200, input of the second positional data which is the output data of the second processor 62. The second processor 62 is the preceding stage of the third processor 72, and belongs to the first controller 50 to which the third processor 72 does not belong.

Although in the embodiments described above the first controller 50 and the second controller 150 are each provided with one or two robotic arms and the tools attached to respective robotic arms, it is not limited to this configuration. That is, the first controller 50 and the second controller 150 may each be provided with three or more robotic arms and tools attached to the respective robotic arms. Since input and output of each positional data in this case is similar to the description for the above embodiments, the description is not repeated here.

Although in the embodiments described above the robot control system 10 is provided with the two controllers (i.e., the first controller 50 and the second controller 150) connected to each other via the communication device 200, it is not limited to this configuration. That is, the robot control system 10 may be provided with three or more controllers connected to each other via the communication device 200. **In** such a case, at least one of the three controllers is connected to two or more robotic arms. Since input and output of each positional data in this case is similar to the description for the above embodiments, the description is not repeated here.

Although the first controller 50 in Embodiment 1 includes the first to fourth processors 52, 62, 72, and 82, it is not limited to this configuration. For example, the first controller 50 may include one processor capable of performing processing similar to the first to fourth processors 52, 62, 72, and 82, instead of the first to fourth processors 52, 62, 72, and 82. Since this is similarly applied to the first controller 50 and the second controller 150 including the plurality of processors in the other embodiments, the description is not repeated here.

Although in the embodiments described above the memory 51 is provided inside the first controller 50, it is not limited to this configuration. For example, the memory 51 may be provided separately from the first controller 50, and for example, connected to the first controller 50 via electrical wiring.

Although in the embodiments described above, each of the first, second, third, and fourth robotic arms 30, 40, 130, and 140 is a horizontal articulated robotic arm, it is not limited to this configuration. For example, the first, second, third, and fourth robotic arms 30, 40, 130, and 140 may each be a vertical articulated robotic arm, or another type of robotic arm having at least one joint axis.

### DESCRIPTION OF REFERENCE CHARACTERS

- 10: Robot Control System
- 20: First Robot
- 30: First Robotic Arm
- 38: First Tool
- 40: Second Robotic Arm
- 48: Second Tool
- 50: First Controller
- 51: Memory
- 52: First Processor
- 54: First Controlling Module
- 62: Second Processor
- 64: Second Controlling Module
- 72: Third Processor
- 74: Third Controlling Module
- 82: Fourth Processor
- 84: Fourth Controlling Module
- 120: Second Robot
- 130: Third Robotic Arm
- 138: Third Tool
- 140: Fourth Robotic Arm
- 148: Fourth Tool
- 150: Second Controller
- 200: Communication Device
- 210: Conveyor Belt

## Claims

1. A robot control system (10A-10G), comprising:
a first controller (50) built in a first robot (20), a second controller (150) built in a second robot (120), a communication device (200) configured to perform data communication between the first controller (50) and the second controller (150), a first robotic arm (30) of the first robot (20), a second robotic arm (40) of the first robot (20), a third robotic arm (130) of the second robot (120), a first tool (38) attached to the first robotic arm (30), a second tool (48) attached to the second robotic arm (40), and a third tool (138) attached to the third robotic arm (130), the first controller (50) including:
a first processor (52) configured to create, as output data, first positional data that is a position of the first tool (38) in a base coordinate system, based on an operation plan for the first robotic arm (30) stored in advance in a memory (51); and
a first controlling module (54) configured to control an operation of the first robotic arm (30) based on the first positional data that is the output data of the first processor (52), the first processor (52) being a preceding stage of the first controlling module (54),
wherein the first controller (50) includes:
a second processor (62) configured to create, as output data, second positional data in which a position of the second tool (48) does not change in a first-tool coordinate system defined by the first tool (38) based on the first positional data that is the output data of the first processor (52), the first processor (52) being a preceding stage of the second processor (62);
a second controlling module (64) configured to control an operation of the second robotic arm (40) based on the second positional data that is the output data of the second processor (62), the second processor (62) being a preceding stage of the second controlling module (64); and
a third processor (72) configured to create, as output data, third positional data that is one of data in which a position of the third tool (138) does not change in the first-tool coordinate system defined by the first tool (3 8) based on the first positional data that is the output data of the first processor (52), the first processor (52) being a preceding stage of the third processor (72), and data in which the position of the third tool (138) does not change in a second-tool coordinate system defined by the second tool (48) based on the second positional data that is the output data of the second processor (62), the second processor (62) being the preceding stage of the third processor (72),
wherein the second controller (150) includes a third controlling module (74) configured to control an operation of the third robotic arm (130) based on the third positional data that is the output data of the third processor (72), the third processor (72) being a preceding stage of the third controlling module (74),
wherein the first controlling module (54) receives, not via the communication device (200), input of the first positional data that is the output data from the first processor (52), the first processor (52) being the preceding stage of the first controlling module (54),
wherein the second processor (62) receives, not via the communication device (200), input of the first positional data that is the output data of the first processor (52), the first processor (52) being the preceding stage of the second processor (62) and belonging to the first controller (50) to which the second processor (62) belongs,
wherein the second controlling module (64) receives, not via the communication device (200), input of the second positional data that is the output data of the second processor (62), the second processor (62) being the preceding stage of the second controlling module (64) and belonging to the first controller (50) to which the second controlling module (64) belongs,
wherein the third processor (72) receives, not via the communication device (200), input of the first positional data that is the output data of the first processor (52), the first processor (52) being the preceding stage of the third processor (72) and belonging to the first controller (50) to which the third processor (72) belongs, or receives, not via the communication device (200), input of the second positional data that is the output data of the second processor (62), the second processor (62) being the preceding stage of the third processor (72) and belonging to the first controller (50) to which the third processor (72) belongs, and
wherein the third controlling module (74) receives, via the communication device (200), input of the third positional data that is the output data of the third processor (72), the third processor (72) being the preceding stage of the third controlling module (74) and belonging to the first controller (50) to which the third controlling module (74) does not belong.

## Patentansprüche

1. Robotersteuerungs- bzw. -regelungssystem (10A-10G), umfassend:
einen ersten Controller (50), der in einen ersten Roboter (20) eingebaut ist, einen zweiten Controller (150), der in einen zweiten Roboter (120) eingebaut ist, eine Kommunikationsvorrichtung (200), die konfiguriert ist, eine Datenkommunikation zwischen dem ersten Controller (50) und dem zweiten Controller (150) durchzuführen, einen ersten Roboterarm (30) des ersten Roboters (20), einen zweiten Roboterarm (40) des ersten Roboters (20), einen dritten Roboterarm (130) des zweiten Roboters (120), ein erstes Werkzeug (38), das an dem ersten Roboterarm (30) angebracht ist, ein zweites Werkzeug (48), das an dem zweiten Roboterarm (40) angebracht ist, und ein drittes Werkzeug (138), das an dem dritten Roboterarm (130) angebracht ist, wobei der erste Controller (50) beinhaltet:
einen ersten Prozessor (52), der konfiguriert ist, als Ausgangsdaten erste Positionsdaten zu erzeugen, die eine Position des ersten Werkzeugs (38) in einem Basiskoordinatensystem sind, und zwar basierend auf einem Betriebsplan für den ersten Roboterarm (30), der im Voraus in einem Speicher (51) gespeichert wird; und
ein erstes Steuerungs- bzw. Regelungsmodul (54), das konfiguriert ist, einen Betrieb des ersten Roboterarms (30) basierend auf den ersten Positionsdaten zu steuern bzw. zu regeln, welche die Ausgangsdaten des ersten Prozessors (52) sind, wobei der erste Prozessor (52) eine vorgeschaltete Stufe des ersten Steuerungs- bzw. Regelungsmoduls (54) ist,
wobei der erste Controller (50) beinhaltet:
einen zweiten Prozessor (62), der konfiguriert ist, als Ausgangsdaten zweite Positionsdaten zu erzeugen, bei denen sich eine Position des zweiten Werkzeugs (48) in einem durch das erste Werkzeug (38) definierten Koordinatensystem des ersten Werkzeugs nicht ändert, und zwar basierend auf den ersten Positionsdaten, welche die Ausgangsdaten des ersten Prozessors (52) sind, wobei der erste Prozessor (52) eine vorgeschaltete Stufe des zweiten Prozessors (62) ist;
ein zweites Steuerungs- bzw. Regelungsmodul (64), das konfiguriert ist, einen Betrieb des zweiten Roboterarms (40) basierend auf den zweiten Positionsdaten zu steuern bzw. zu regeln, welche die Ausgangsdaten des zweiten Prozessors (62) sind, wobei der zweite Prozessor (62) eine vorgeschaltete Stufe des zweiten Steuerungs- bzw. Regelungsmoduls (64) ist; und
einen dritten Prozessor (72), der konfiguriert ist, als Ausgangsdaten dritte Positionsdaten zu erzeugen, die eines von Daten, bei denen sich eine Position des dritten Werkzeugs (138) in dem durch das erste Werkzeug (38) definierten Koordinatensystem des ersten Werkzeugs nicht ändert, und zwar basierend auf den ersten Positionsdaten, welche die Ausgangsdaten des ersten Prozessors (52) sind, wobei der erste Prozessor (52) eine vorgeschaltete Stufe des dritten Prozessors (72) ist, und Daten sind, bei denen sich die Position des dritten Werkzeugs (138) in einem durch das zweite Werkzeug (48) definierten Koordinatensystem des zweiten Werkzeugs nicht ändert, und zwar basierend auf den zweiten Positionsdaten, welche die Ausgangsdaten des zweiten Prozessors (62) sind, wobei der zweite Prozessor (62) eine vorgeschaltete Stufe des dritten Prozessors (72) ist,
wobei der zweite Controller (150) ein drittes Steuerungs- bzw. Regelungsmodul (74) beinhaltet, das konfiguriert ist, einen Betrieb des dritten Roboterarms (130) basierend auf den dritten Positionsdaten zu steuern bzw. zu regeln, welche die Ausgangsdaten des dritten Prozessors (72) sind, wobei der dritte Prozessor (72) eine vorgeschaltete Stufe des dritten Steuerungs- bzw. Regelungsmoduls (74) ist,
wobei das erste Steuerungs- bzw. Regelungsmodul (54), nicht über die Kommunikationsvorrichtung (200), eine Eingabe der ersten Positionsdaten empfängt, welche die Ausgangsdaten des ersten Prozessors (52) sind, wobei der erste Prozessor (52) die vorgeschaltete Stufe des ersten Steuerungs- bzw. Regelungsmoduls (54) ist,
wobei der zweite Prozessor (62), nicht über die Kommunikationsvorrichtung (200), eine Eingabe der ersten Positionsdaten empfängt, welche die Ausgangsdaten des ersten Prozessors (52) sind, wobei der erste Prozessor (52) die vorgeschaltete Stufe des zweiten Prozessors (62) ist und zu demselben ersten Controller (50) gehört wie der zweite Prozessor (62),
wobei das zweite Steuerungs- bzw. Regelungsmodul (64), nicht über die Kommunikationsvorrichtung (200), eine Eingabe der zweiten Positionsdaten empfängt, welche die Ausgangsdaten des zweiten Prozessors (62) sind, wobei der zweite Prozessor (62) die vorgeschaltete Stufe des zweiten Steuerungs- bzw. Regelungsmoduls (64) ist und zu demselben ersten Controller (50) gehört wie das zweite Steuerungs- bzw. Regelungsmodul (64),
wobei der dritte Prozessor (72), nicht über die Kommunikationsvorrichtung (200), eine Eingabe der ersten Positionsdaten empfängt, welche die Ausgangsdaten des ersten Prozessors (52) sind, wobei der erste Prozessor (52) die vorgeschaltete Stufe des dritten Prozessors (72) ist und zu dem ersten Controller (50) gehört, zu dem der dritte Prozessor (72) gehört, oder, nicht über die Kommunikationsvorrichtung (200), eine Eingabe der zweiten Positionsdaten empfängt, welche die Ausgangsdaten des zweiten Prozessors (62) sind, wobei der zweite Prozessor (62) die vorgeschaltete Stufe des dritten Prozessors (72) ist und zu dem ersten Controller (50) gehört, zu dem der dritte Prozessor (72) gehört, und
wobei das dritte Steuerungs- bzw. Regelungsmodul (74) über die Kommunikationsvorrichtung (200) eine Eingabe der dritten Positionsdaten empfängt, welche die Ausgangsdaten des dritten Prozessors (72) sind, wobei der dritte Prozessor (72) die vorgeschaltete Stufe des dritten Steuerungs- bzw. Regelungsmoduls (74) ist und zu dem ersten Controller (50) gehört, zu dem das dritte Steuerungs- bzw. Regelungsmodul (74) nicht gehört.

## Revendications

1. Système de commande de robot (10A à 10G), comprenant :
un premier contrôleur (50) construit dans un premier robot (20), un second contrôleur (150) construit dans un second robot (120), un dispositif de communication (200) configuré pour réaliser une communication de données entre le premier contrôleur (50) et le second contrôleur (150), un premier bras robotique (30) du premier robot (20), un deuxième bras robotique (40) du premier robot (20), un troisième bras robotique (130) du second robot (120), un premier outil (38) relié au premier bras robotique (30), un deuxième outil (48) relié au deuxième bras robotique (40), et un troisième outil (138) relié au troisième bras robotique (130), le premier contrôleur (50) incluant :
un premier processeur (52) configuré pour créer, en tant que données de sortie, des premières données positionnelles qu'est une position du premier outil (38) dans un système de coordonnées de base, en fonction d'un plan d'opération pour le premier bras robotique (30) stocké en avance dans une mémoire (51) ; et
un premier module de commande (54) configuré pour commander une opération du premier bras robotique (30) en fonction des premières données positionnelles que sont les données de sortie du premier processeur (52), le premier processeur (52) étant un étage précédent du premier module de commande (54),
dans lequel le premier contrôleur (50) inclut :
un deuxième processeur (62) configuré pour créer, en tant que données de sortie, des deuxièmes données positionnelles dans lesquelles une position du deuxième outil (48) ne change pas dans un système de coordonnées de premier outil défini par le premier outil (38) en fonction des premières données positionnelles que sont les données de sortie du premier processeur (52), le premier processeur (52) étant un étage précédent du deuxième processeur (62) ;
un deuxième module de commande (64) configuré pour commander une opération du deuxième bras robotique (40) en fonction des deuxièmes données positionnelles que sont les données de sortie du deuxième processeur (62), le deuxième processeur (62) étant un étage précédent du deuxième module de commande (64) ; et
un troisième processeur (72) configuré pour créer, en tant que données de sortie, des troisièmes données positionnelles qu'est un élément parmi des données dans lesquelles une position du troisième outil (138) ne change pas dans le système de coordonnées de premier outil défini par le premier outil (38) en fonction des premières données positionnelles que sont les données de sortie du premier processeur (52), le premier processeur (52) étant un étage précédent du troisième processeur (72), et des données dans lesquelles la position du troisième outil (138) ne change pas dans un système de coordonnées de deuxième outil défini par le deuxième outil (48) en fonction des deuxièmes données positionnelles que sont les données de sortie du deuxième processeur (62), le deuxième processeur (62) étant l'étage précédent du troisième processeur (72),
dans lequel le second contrôleur (150) inclut un troisième module de commande (74) configuré pour commander une opération du troisième bras robotique (130) en fonction des troisièmes données positionnelles que sont les données de sortie du troisième processeur (72), le troisième processeur (72) étant un étage précédent du troisième module de commande (74),
dans lequel le premier module de commande (54) reçoit, non par le biais du dispositif de communication (200), une entrée des premières données positionnelles que sont les données de sortie du premier processeur (52), le premier processeur (52) étant l'étage précédent du premier module de commande (54),
dans lequel le deuxième processeur (62) reçoit, non par le biais du dispositif de communication (200), une entrée des premières données positionnelles que sont les données de sortie du premier processeur (52), le premier processeur (52) étant l'étage précédent du deuxième processeur (62) et appartenant au premier contrôleur (50) auquel le deuxième processeur (62) appartient,
dans lequel le deuxième module de commande (64) reçoit, non par le biais du dispositif de communication (200), une entrée des deuxièmes données positionnelles que sont les données de sortie du deuxième processeur (62), le deuxième processeur (62) étant l'étage précédent du deuxième module de commande (64) et appartenant au premier contrôleur (50) auquel le deuxième module de commande (64) appartient,
dans lequel le troisième processeur (72) reçoit, non par le biais du dispositif de communication (200), une entrée des premières données positionnelles que sont les données de sortie du premier processeur (52), le premier processeur (52) étant l'étage précédent du troisième processeur (72) et appartenant au premier contrôleur (50) auquel le troisième processeur (72) appartient, ou reçoit, non par le biais du dispositif de communication (200), une entrée des deuxièmes données positionnelles que sont les données de sortie du deuxième processeur (62), le deuxième processeur (62) étant l'étage précédent du troisième processeur (72) et appartenant au premier contrôleur (50) auquel le troisième processeur (72) appartient, et
dans lequel le troisième module de commande (74) reçoit, par le biais du dispositif de communication (200), une entrée des troisièmes données positionnelles que sont les données de sortie du troisième processeur (72), le troisième processeur (72) étant l'étage précédent du troisième module de commande (74) et appartenant au premier contrôleur (50) auquel le troisième module de commande (74) n'appartient pas.
